# EUROPÄISCHE PATENTSCHRIFT

(11) **EP 4 592 095 B1**
(45) Veröffentlichungstag und Bekanntmachung des Hinweises auf die Patenterteilung: **18.11.2026**
(21) Anmeldenummer: 25151243.0
(22) Anmeldetag: 10.01.2025
(51) Int. Cl.: B60C 11/03, B60C 11/12, B60C 11/13

(54) **FAHRZEUGREIFEN**
VEHICLE TYRE
BANDAGE PNEUMATIQUE POUR VÉHICULES

(30) Priorität: 26.01.2024 DE 102024200714
(43) Veröffentlichungstag der Anmeldung: 30.07.2025
(73) Patentinhaber: Continental Reifen Deutschland GmbH, 30175 Hannover (DE)
(72) Erfinder: Bauer, Claudia, 30175 Hannover (DE); Heinhaupt, Torsten, 30175 Hannover (DE); Subramanian Sivanarutchelvi, Manickaraj, 30175 Hannover (DE); Brandau, Christian, 30175 Hannover (DE); Brockmann, Jürgen, 30175 Hannover (DE); Seng, Matthias, 30175 Hannover (DE)
(74) Vertreter: Continental Corporation

(56) Entgegenhaltungen:
- EP-A2- 1 872 974
- DE-A1- 102008 037 563
- DE-A1- 102018 119 905
- US-A1- 2022 169 081
- US-A1- 2022 324 261

## Beschreibung

Die Erfindung betrifft einen Fahrzeugreifen mit einem Laufstreifen mit durch Querrillen und seitliche von weiteren Rillen begrenzten Profilblöcken mit je einer Blockaußenfläche und je einer Blockflanke an jeder Querrille, wobei zu den Profilblöcken solche gehören, welche jeweils von zumindest einer in die angrenzende(n) weitere(n) Rille(n) einmündenden, schmäler als die Querrillen und insbesondere schmäler als die weiteren Rillen ausgeführten Teilungsnut mit zwei an der Blockaußenfläche liegenden Begrenzungskanten, einer in radialer Richtung ermittelten maximalen Tiefe von zumindest 55% der Profiltiefe und einer zwischen den Begrenzungskanten ermittelten Breite von 1,00 mm bis 3,00 durchquert und derart in Blockteile gegliedert sind, wobei die Teilungsnut in radialer Richtung aus einer über die Begrenzungskanten verlaufenden Außenrille und einem radial innen an diese anschließenden Inneneinschnitt mit einer Breite von zumindest 0,40 mm und höchstens 50% der Breite der Außenrille gebildet ist.

Ein derartiger Fahrzeugreifen ist beispielsweis aus der DE 10 2008 037 563 A1 offenbart. Der Fahrzeugreifen weist einen Laufstreifen mit Umfangsrillen auf, welche Profilblockreihen mit Profilblöcken voneinander trennen. Die Profilblöcke sind mit Einschnitten mit einer Breite von 0,4 mm bis 0,8 mm und abwechselnd mit diesen angeordneten Teilungsnuten mit einer Breite von 1,0 mm bis 4,0 mm versehen. Gemäß einer Ausführungsvariante ist jede Teilungsnut in radialer Richtung aus einer Außenrille ("breiterer Einschnitt"), die nicht auf Profiltiefe reicht, und einem vom Rillengrund der Außenrille ausgehende Inneneinschnitt ("zusätzlicher schmaler Einschnitt") gebildet. Die Außenrille reicht bis in eine Tiefe von zumindest 1,0 mm, insbesondere zumindest 2,0 mm. Der Inneneinschnitt endet am Niveau der Profiltiefe und weist eine Breite von 0,4 mm bis 0,6 mm auf. Der Einschnitte und Teilungsnuten stellen Griffkanten zur Verfügung. Zusätzlich können sich die Teilungsnuten beim Abrollen des Reifens auf Schnee mit Schnee füllen. Der Reifen soll daher einen guten Schneegriff aufweisen, wobei die Steifigkeit der Profilblöcke nur wenig beeinträchtigt, also verringert sein soll.

US 2022/324261 A1 beschreibt einen Fahrzeugreifen mit einer Lauffläche, umfassend einen außenliegende Schulterlandabschnitt mit einer Vielzahl von außenliegenden Schulterquerrillen und einer Vielzahl von außenliegenden Schulterfeinschnitten, wobei die Vielzahl von außenliegenden Schulterquerrillen sich von der außenliegenden Schulterumfangsrille bis zu einer Stelle jenseits der außenliegenden Laufflächenkante erstrecken und wobei die Vielzahl von außenliegenden Schulterfeinschnitten mit der außenliegenden Schulterumfangsrille in Verbindung stehen.

Der Erfindung liegt daher die Aufgabe zugrunde, bei einem Fahrzeugreifen der eingangs genannten Art die Schneegriff- und Trockenperformance auf günstigere Weise als bisher auszubalancieren.

Gelöst wird die gestellte Aufgabe erfindungsgemäß durch die Merkmale des Anspruchs 1, nämlich unter anderem dadurch, dass
∘ dass der Inneneinschnitt gemeinsam mit der Außenrille in die bzw. jede den Profilblock begrenzende, weitere Rille einmündet, wobei die Außenrille eine maximale Tiefe von mindestens 50% der maximalen Tiefe der Teilungsnut aufweist und
∘ wobei die Blockflanken jeweils eine zur Blockaußenfläche verlaufende Schrägfläche, aufweisen, welche, im in Draufsicht senkrecht zur Rillenmittellinie der Querrille ausgerichteten Querschnitt betrachtet, als gerade Linie erscheint und zur radialen Richtung unter einem Winkel von 35° bis 55° verläuft.

Die vorgesehene Teilungsnut aus gemeinsam einmündenden Inneneinschnitt und Außenrille, wobei die Außenrille eine spezifische Mindesttiefe aufweist, sorgt beim Durchlaufen der Bodenaufstandsfläche für ein im Hinblick auf die Griffwirkung der Begrenzungskante der Teilungsnut besonders günstiges Aufklappverhalten der Teilungsnut, wodurch der Schneegriff verbessert ist. Die Schrägflächen an den Blockflanken wirken der mit der Teilungsnut einhergehenden Steifigkeitsreduktion der Profilblöcke insofern entgegen, da sie vor allem beim Bremsen und unter Traktion auf trockener Fahrbahn, ein "Einrollen" der stark belasteten Blockkantenbereiche verhindern, sodass zusätzlich eine gute Trockenperformance erhalten bleibt.

Gemäß einer bevorzugten Ausführung weist die Außenrille einen Rillengrund auf, von welchem der Inneneinschnitt ausgeht und welcher, im Querschnitt betrachtet, aus zwei Rillengrundrundhälften gebildet ist, die - über die Erstreckung des Inneneinschnitts - durch diesen voneinander getrennt sind. Der Inneneinschnitt ist, in Draufsicht betrachtet, somit mittig in der Außenrille ausgebildet, wodurch das Aufklappverhalten der Teilungsnut und derart der Schneegriff weiter verbessert ist.

Nachfolgend wird auf miteinander kombinierbarere vorteilhafte Weiterentwicklungen der bevorzugten Ausführung eingegangen.

Bei einer ersten vorteilhaften Weiterentwicklung verlaufen die Rillengrundrundhälften über die Erstreckung des Inneneinschnitts, im Querschnitt betrachtet, zur radialen Richtung derart geneigt und S-förmig, dass ein parallel zur Laufstreifenperipherie zwischen den Rillengrundrundhälften ermittelter gegenseitiger Abstand über die komplette radiale Erstreckung der Rillengrundhälften fortlaufend in Richtung Rillengrund abnimmt. Dies sorgt für eine gute Rissbeständigkeit des angrenzenden Gummimaterials, was ebenfalls für die Trockenperformance, insbesondere bei fortgeschrittenem Laufstreifenabrieb, günstig ist.

Bei der ersten vorteilhaften Weiterentwicklung ist es bevorzugt, wenn sich die Rillengrundhälften über die Erstreckung des Inneneinschnitts, im Querschnitt betrachtet, jeweils aus einem radial äußeren Abschnitt und einem tangential an diesen anschließenden radial inneren Abschnitt zusammensetzen, wobei der radial äußere Abschnitt und der radial innere Abschnitt jeweils entlang eines Kreisbogens mit einem Radius von 0,20 mm bis 0,50 mm verläuft.

Gemäß einer zweiten vorteilhaften Weiterentwicklung ist die Außenrille vom Rillengrund und zwei Rillenflanken begrenzt, wobei die Rillenflanken, im in Draufsicht senkrecht zur Rillenmittellinie der Querrille ausgerichteten Querschnitt betrachtet, zur radialen Richtung unter einem Winkel von 0° bis 6°, insbesondere von zumindest 2°, bevorzugt von 3° bis 5°, verlaufen und insbesondere tangential an das radial äußere Ende der Rillengrundrundhälften anschließen. Der tangentiale Anschluss verbessert die Rissbeständigkeit des angrenzenden Gummimaterials weiter. Der angegebene Winkel der Rillenflanken trägt dazu bei, dass die Steifigkeitsreduktion der Profilblöcke durch die Teilungsnut gering gehalten wird, was für die Trockenperformance günstig ist.

Gemäß einer dritten vorteilhaften Weiterentwicklung ist der Inneneinschnitt durch einen Einschnittgrund und zwei in radialer Richtung verlaufende Einschnittwände begrenzt, welche im Querschnitt betrachtet, tangential an die radial inneren Enden der Rillengrundrundhälften anschließen. Auch diese Maßnahme ist für die Rissbeständigkeit des angrenzenden Gummimaterials und die Trockenperformance vorteilhaft.

Gemäß einer weiteren bevorzugten Ausführung gehören zu den Profilblöcken, welche jeweils von zumindest einer Teilungsnut durchquert sind, insbesondere ausschließlich Profilblöcke, die jeweils von genau einer Teilungsnut durchquert sind. Solche Profilblöcke sind vor allem für die Trockenperformance vorteilhaft.

Ferner ist es bevorzugt, wenn der Winkel, unter welchem die Schrägflächen der Blockflanken zur radialen Richtung verlaufen, 40° bis 50° beträgt.

Gemäß einer weiteren bevorzugten Ausführung ist die Schrägfläche jeder Blockflanke durch eine an der Blockaußenfläche liegende, radial äußere Kante und eine radial innere Kante begrenzt, wobei die radial innere Kante in einer in radialer Richtung ermittelten konstanten Tiefe von 0,50 mm bis 1,50 mm, insbesondere von 0,75 mm bis 1,25 mm, verläuft. Dies trägt zu einer guten Trockenperformance bei.

Gemäß einer weiteren bevorzugten Ausführung setzt sich die Blockflanke, im Querschnitt betrachtet, aus der Schrägfläche und einem radial inneren Flankenabschnitt zusammen, wobei der radial inneren Flankenabschnitt zur radialen Richtung unter einem Winkel von 1° bis 10° verläuft und in einer in radialer Richtung gegenüber dem Niveau der Blockaußenflächen ermittelten Tiefe von 55% bis 95%, insbesondere von 65% bis 85%, der maximalen Tiefe der Querrille an den Rillengrund der Querrille anschließt. Der radial innere Flankenabschnitt trägt zur Aufrechterhaltung einer hohen Steifigkeit der Profilblöcke bei.

Bei der letztgenannten Ausführung ist es ferner günstig, wenn der Laufstreifen laufrichtungsgebunden ausgeführt ist, sodass die Profilblöcke an der einen angrenzenden Querrille einen beim Abrollen des Reifens bei Vorwärtsfahrt zuerst in den Untergrund eintretenden, einlaufenden Blockkantenbereich und an der anderen angrenzenden Querrille einen auslaufenden Blockkantenbereich aufweisen, wobei der Winkel, unter welchem der radial innere Flankenabschnitt der entlang des einlaufenden Blockkantenbereichs ausgebildeten Blockflanke verläuft, um 2° bis 8°, insbesondere um bis zu 6°, größer ist als der Winkel, unter welchem der radial innere Flankenabschnitt der entlang des auslaufenden Blockkantenbereichs ausgebildeten Blockflanke verläuft.

Eine weitere bevorzugte Ausführung sieht vor, dass die Blockteile jeweils von zumindest einem in die an den Profilblock angrenzende(n) weitere(n) Rille(n) einmündenden Einschnitt mit einer Breite von 0,4 mm bis 1,2 mm und einer maximalen Tiefe von 60% bis 100% der Profiltiefe durchquert und derart in Blocksegmente unterteilt sind, wobei der bzw. jeder Einschnitt - bezogen auf seine in Draufsicht in Erstreckungsrichtung ausgerichtete Einschnittmittellinie - parallel zur Teilungsnut verläuft. Die Einschnitte sind für die Schneeperformance günstig. Der parallele Verlauf der Einschnitte zur Teilungsnut sorgt für gleichmäßig abreibende Blocksegmente, was zur Aufrechterhaltung einer guten Trockenperformance beiträgt.

Gemäß einer vorteilhaften Variante der letztgenannten Ausführung sind die Blocksegmente jeweils mit in Draufsicht langgestreckten, relativ zu den Einschnitten unter Supplementwinkel von 60° bis 120°, insbesondere von 70° bis 110°, verlaufenden Mikrorillen mit einer konstanten Breite und einer konstanten Tiefe von jeweils 0,20 mm bis 1,00 mm, insbesondere von 0,30 mm bis 0,90 mm, versehen, wobei die Mikrorillen, welche sich in an denselben Einschnitt angrenzenden Blocksegmenten befinden, in Draufsicht betrachtet, vorzugsweise miteinander fluchtend verlaufen. Derart orientierte Mikrorillen sind eine für die Griffeigenschaften des Laufstreifens bei neuem bzw. wenig abgefahrenem Reifen besonders günstige Ergänzung zu den Einschnitten.

Bevorzugter Weise beträgt die maximale Tiefe der Teilungsnut bis zu 100%, insbesondere 60% bis 90%, bevorzugt 65% bis 80%, der Profiltiefe. Dies ist vor allem für das erwähnte Aufklappverhalten der Teilungsnut und somit für den Schneegriff von weiterem Vorteil.

Ferner ist es bevorzugt, wenn die Breite der Außenrille 1,50 mm bis 2,50 mm und/oder wenn die maximale Tiefe der Außenrille 60% bis 90%, bevorzugt 65% bis 85%, besonders bevorzugt 70% bis 75%, der maximale Tiefe der Teilungsnut beträgt. Dies ist ebenfalls für das erwähnte Aufklappverhalten der Teilungsnut und somit für den Schneegriff von zusätzlichem Vorteil.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Draufsicht auf einen in die Ebene abgewickelten Umfangsabschnitt eines Laufstreifens eines Fahrzeugreifens mit einer Ausführungsvariante der Erfindung,
Fig. 2 einen Schnitt entlang der Linie II-II der Fig. 1,
Fig. 3 eine vergrößerte Draufsicht auf das Detail Z₃ der Fig. 1,
Fig. 4 einen Schnitt entlang der Linie IV-IV der Fig. 3,
Fig. 5 einen Schnitt entlang der Linie V-V der Fig. 3,
Fig. 5a eine Vergrößerung der Fig. 5,
Fig. 6 einen Schnitt entlang der Linie VI-VI der Fig. 3,
Fig. 7 eine Schrägansicht einer Visualisierung (eines Abzugskörpers) einer Teilungsnut und
Fig. 8 einen Schnitt entlang der Linie VIII-VIII der Fig. 3.

Gemäß der Erfindung ausgeführte Fahrzeugreifen sind Reifen für Kraftfahrzeuge, insbesondere für mehrspurige Kraftfahrzeuge, bevorzugt für Personenkraftwagen (PKWs), Vans (Transporter) oder SUVs, sowie vorzugsweise Fahrzeugluftreifen, besonders bevorzugt Fahrzeugluftreifen in Radialbauart, für Felgen mit einem ganzzahligen Felgendurchmesser von 13 Zoll bis 24 Zoll, insbesondere von 14 Zoll bis 23 Zoll, wobei die Fahrzeugreifen zum Fahren unter winterlichen Fahrbedingungen vorgesehen sind.

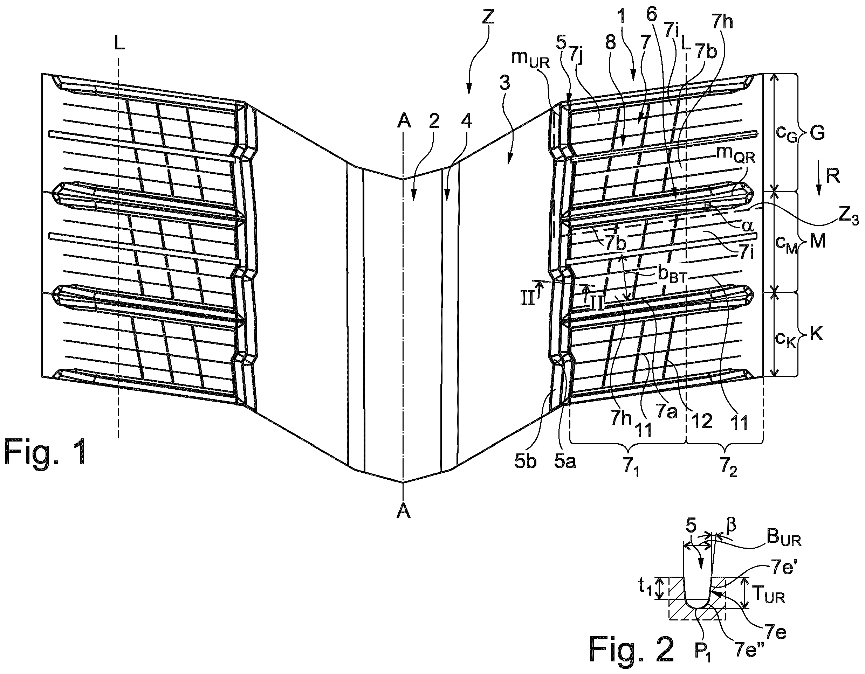

Fig. 1 zeigt eine Draufsicht auf einen vereinfachten Umfangsabschnitt eines Laufstreifens eines Fahrzeugreifens. Die Reifenäquatorialebene ist durch eine gestrichelte Linie A-A und die seitlichen Ränder der Bodenaufstandsfläche des Laufstreifens sind durch gestrichelte Linien L angedeutet. Die Bodenaufstandsfläche entspricht dem statisch ermittelten Footprint gemäß E.T.R.T.O.-Standards (Last bei 70% der maximalen Tragfähigkeit bei einem Innendruck von 85% nach E.T.R.T.O.-Norm).

Der Laufstreifen weist zwei schulterseitige Profilblockreihen 1 und einen zentralen Laufstreifenbereich Z auf, ist bezüglich der Reifenäquatorialebene (Linie A-A) symmetrisch sowie ferner laufrichtungsgebunden ausgeführt, wobei der Fahrzeugreifen derart an einem Fahrzeug zu montieren ist, dass er die durch den Pfeil R gekennzeichnete Abrollrichtung bei Vorwärtsfahrt aufweist.

Der zentrale Laufstreifenbereich Z ist lediglich schematisch dargestellt und umfasst eine von der Reifenäquatorialebene halbierte, zentrale Profilrippe 2 und zwei halbmittige Profilrippen 3, welche von der zentralen Profilrippe 2 durch je eine mittlere Umfangsrille 4 und von der jeweils benachbarten schulterseitigen Profilblockreihe 1 durch je eine schulterseitige Umfangsrille 5 getrennt sind.

Die Umfangsrillen 4, 5 sind in radialer Richtung auf die jeweils vorgesehene, auf den im Querschnitt tiefsten Punkt P₁ (Fig. 2, gezeigt für eine schulterseitige Umfangsrille 5) bezogene Profiltiefe T_{UR} (Fig. 2) ausgeführt, welche für den bevorzugten Reifentyp üblicherweise 6,5 mm bis 13,0 mm beträgt.

Die schulterseitigen Umfangsrillen 5 verlaufen, in Draufsicht betrachtet, zick-zackförmig, weisen jeweils eine dem Rillenverlauf folgende Rillenmittellinie m_{UR} sowie eine in Draufsicht senkrecht zur Rillenmittellinie m_{UR} an der Laufstreifenperipherie ermittelte Breite B_{UR} (Fig. 2, vergl. Lage der Linie II-II in Fig. 1) von 5,0 mm bis 10,0 mm auf und setzen sich, in Draufsicht betrachtet, aus kurzen Rillenabschnitten 5a und gegenüber diesen länger ausgeführten, langen Rillenabschnitten 5b zusammen, wobei jeweils ein Rillenabschnitt 5a abwechselnd auf einen Rillenabschnitt 5b folgt und die Rillenabschnitte 5a bezogen auf die Umfangsrichtung gegensinnig zu den Rillenabschnitten 5b geneigt sind.

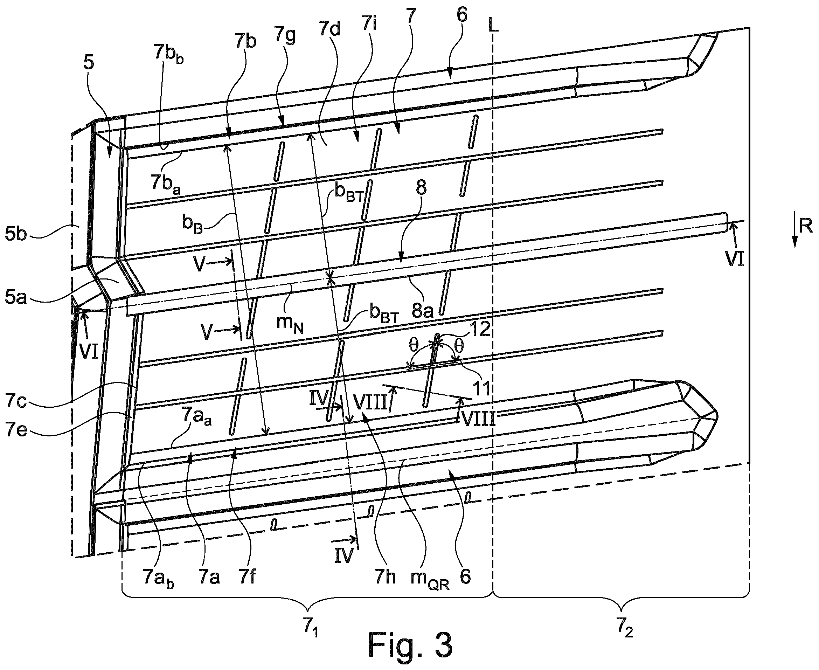

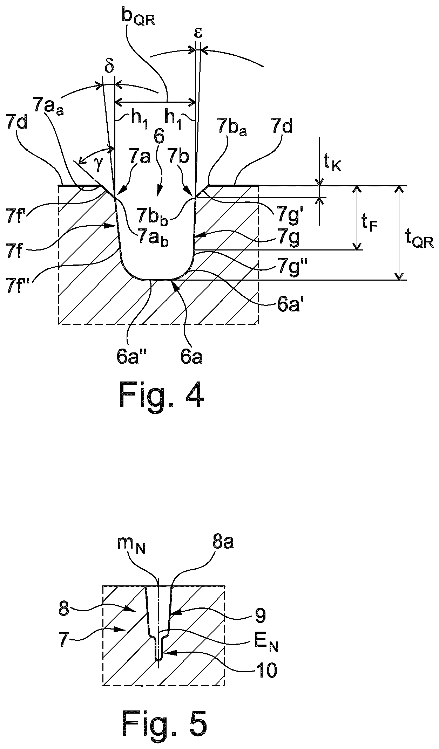

Die schulterseitigen Profilblockreihen 1 sind jeweils mit in Draufsicht parallel zueinander verlaufenden, schulterseitigen Querrillen 6 versehen, welche jeweils in einen langen Rillenabschnitt 5b der jeweiligen schulterseitigen Umfangsrille 5 einmünden, eine Rillenmittellinie m_{QR} aufweisen, in Draufsicht betrachtet, gerade, bezogen auf die Rillenmittellinie m_{QR} zur axialen Richtung unter einem Winkel α von 0° bis 15°, insbesondere von 5° bis 10°, sowie abschnittsweise innerhalb der Bodenaufstandsfläche und abschnittsweise außerhalb der Bodenaufstandsfläche verlaufen und innerhalb der jeweiligen schulterseitigen Profilblockreihe 1 schulterseitige Profilblöcke 7 voneinander trennen. Gemäß Fig. 4 weisen die schulterseitigen Querrillen 6 jeweils eine in radialer Richtung ermittelte, maximale Tiefe t_{QR} (Tiefe an der tiefsten Stelle) von 70% bis 100%, insbesondere von zumindest 90%, besonders bevorzugt von 100%, der Profiltiefe T_{UR} (Fig. 2), eine am Niveau der Laufstreifenperipherie sowie in Draufsicht senkrecht zur Rillenmittellinie m_{QR} (vergl. Lage der Linie IV-IV in Fig. 3) ermittelte Breite b_{QR} von 4,0 mm bis 10,0 mm, insbesondere von bis zu 8,0 mm, auf deren genau Ermittlung noch eingegangen wird, und jeweils einen Rillengrund 6a auf. Der Rillengrund 6a verläuft, im in Draufsicht senkrecht zur Rillenmittellinie m_{QR} verlaufenden Querschnitt betrachtet, U-förmig und weist zwei durchgehend bogenförmig, insbesondere entlang von je einem Kreisbogen, verlaufende seitliche Rillengrundrundungen 6a' und beim Ausführungsbeispiel ferner einen zwischen den seitlichen Rillengrundrundungen 6a' sowie parallel zur Laufstreifenperipherie verlaufenden Rillengrundboden 6a" auf. Alternativ kann der Rillengrund 6a ausschließlich aus den Rillengrundrundungen 6a' gebildet sein.

Wie in Fig. 1 angedeutet ist, ist der Laufstreifen gemäß einem Verfahren der Pitchlängenvariation geräuschoptimiert und setzt sich aus in Umfangsrichtung aufeinanderfolgenden Pitches (gleichartig gestaltete Profilabschnitte) zusammen, wobei beim Ausführungsbeispiel im gezeigten Umfangsabschnitt Pichtes K, M, G mit einer Umfangslänge c_{K} (Pitch K), c_{M} (Pitch M), c_{G} (Pitch G) aufeinanderfolgen und wobei die Umfangslänge c_{K} des Pitchs K von sämtlichen Umfangslängen c_{K}, c_{M}, c_{G} am kleinsten und die Umfangslänge c_{G} des Pitchs G von sämtlichen Umfangslängen c_{K}, c_{M}, c_{G} am größten ist. Die Pitchgrenzen sind lediglich an dem einen seitlichen Rand des Laufstreifens angedeutet und verlaufen, in Draufsicht betrachtet in Längserstreckung durch die Querrillen 6, sodass sich in jedem Pitch K, M, G ein einziger schulterseitiger Profilblock 7 befindet.

Die weitere Ausgestaltung der schulterseitigen Profilblöcke 7 wird nachfolgend anhand eines einzelnen, schulterseitigen Profilblocks 7 erläutert.

Gemäß Fig. 3 weist der schulterseitige Profilblock 7 einen innerhalb der Bodenaufstandsfläche befindlichen, innenseitigen Blockabschnitt 7₁, einen an diesen angrenzenden, außerhalb der Bodenaufstandsfläche befindlichen, zur nicht gezeigten jeweiligen Seitenwand verlaufenden, schulterseitigen Blockabschnitt 7₂, einen an der einen angrenzenden Querrille 6 ausgebildeten, beim Abrollen des Reifens bei Vorwärtsfahrt (Pfeil R) zuerst in den Untergrund eintretenden, einlaufenden Blockkantenbereich 7a, einen an der anderen angrenzenden Querrille 6 ausgebildeten, auslaufenden Blockkantenbereich 7b und eine an der schulterseitigen Umfangsrille 5 ausgebildete, seitliche Blockkante 7c auf. Der schulterseitige Profilblock 7 ist in radialer Richtung durch eine in der Laufstreifenperipherie liegende, sowohl über den innenseitigen Blockabschnitt 7₁ als auch über den schulterseitigen Blockabschnitt 7₂ reichende Blockaußenfläche 7d, an der schulterseitigen Umfangsrille 5 durch eine über die seitliche Blockkante 7c verlaufende, seitliche Blockflanke 7e, in der einen Umfangsrichtung zur angrenzenden Querrille 6 durch eine entlang des einlaufenden Blockkantenbereichs 7a ausgebildete Blockflanke 7f und in der anderen Umfangsrichtung zur angrenzenden Querrille 6 durch eine entlang des auslaufenden Blockkantenbereichs 7b ausgebildete Blockflanke 7g begrenzt.

Gemäß Fig. 2 setzt sich die seitliche Blockflanke 7e, im in Draufsicht senkrecht zur seitliche Blockkante 7c verlaufenen Querschnitt betrachtet (vergl. Lage der Linie II-II in Fig. 1 iVm Fig. 3), aus einem radial äußeren Flankenabschnitt 7e' und einem radial inneren Flankenabschnitt 7e" zusammen. Der radial äußere Flankenabschnitt 7e' verläuft, im erwähnten Querschnitt betrachtet, gerade sowie zur radialen Richtung unter einem Winkel β von 0° bis 10°, insbesondere von 4° bis 8°, schließt in einer in radialen Richtung ermittelten Tiefe t₁ von 45% bis 85%, insbesondere von 50% bis 80%, der Profiltiefe T_{UR} tangential an den radial inneren Flankenabschnitt 7e" an, welcher, im erwähnten Querschnitt betrachtet, bogenförmig sowie zur tiefsten Punkt P₁ der schulterseitigen Umfangsrille 5 verläuft.

Gemäß Fig. 4 schließen die Blockflanken 7f, 7g, im in Draufsicht senkrecht zur Rillenmittellinie m_{QR} ausgerichteten Querschnitt betrachtet (vergl. Lage der Linie IV-IV in Fig. 3), an das jeweilige radial äußere Ende des Rillengrunds 6a, beim Ausführungsbeispiel daher an das radial äußere Ende der jeweiligen Rillengrundrundung 6a', an und setzen sich, im zuletzt erwähnten Querschnitt betrachtet, aus einer radial äußeren Schrägfläche 7f', 7g' und einem radial inneren Flankenabschnitt 7f", 7g" zusammen. Die radial äußere Schrägfläche 7f' ist an der entsprechenden Blockaußenfläche 7d durch eine radial äußere Kante 7aₐ (vergl. Fig. 3) des einlaufenden Blockkantenbereichs 7a und eine radial innere Kante 7a_{b} (vergl. Fig. 3) des einlaufenden Blockkantenbereichs 7a begrenzt. Die radial äußere Schrägfläche 7g' ist an der entsprechenden Blockaußenfläche 7d durch eine radial äußere Kante 7bₐ (vergl. Fig. 3) des auslaufenden Blockkantenbereichs 7b und eine radial innere Kante 7b_{b} (vergl. Fig. 3) des auslaufenden Blockkantenbereichs 7b begrenzt. Die radial äußeren Schrägflächen 7f', 7g' erscheinen, im zuletzt erwähnten Querschnitt betrachtet, als gerade Linien und verlaufen zur radialen Richtung unter einem über ihre in Draufsicht vorliegende Erstreckung insbesondere konstanten Winkel γ von 35° bis 55°, insbesondere von 40° bis 50°. Die radial innere Kante 7a_{b}, 7b_{b} verläuft in einer in radialer Richtung ermittelten konstanten Tiefe t_{K} von 0,50 mm bis 1,50 mm, insbesondere von 0,75 mm bis 1,25 mm. Der radial innere Flankenabschnitt 7f", 7g" verläuft, im zuletzt erwähnten Querschnitt betrachtet, zur radialen Richtung unter einem konstanten Winkel δ (Flankenabschnitt 7f"), ε (Flankenabschnitt 7g") von jeweils 1° bis 10°, wobei der Winkel δ des Flankenabschnitts 7f" um 2° bis 8°, insbesondere bis zu 6°, größer ist als der Winkel ε des Flankenabschnitts 7g". Der radial innere Flankenabschnitt 7f", 7g" schließt in einer in radialer Richtung gegenüber dem Niveau der Blockaußenflächen 7d ermittelten Tiefe t_{F} von 55% bis 95%, insbesondere von 65% bis 85%, der maximalen Tiefe t_{QR} der Querrille 6 an der Rillengrund 6a, also die jeweilige Rillengrundrundung 6a', an.

Die bereits erwähnte Breite b_{QR} der Querrillen 6 ist jeweils ohne die radial äußere Schrägflächen 7f', 7g' ermittelt und bezieht sich auf im Querschnitt in radialer Richtung durch die radial inneren Kanten 7a_{b}, 7b_{b} verlaufende Hilfslinien h₁.

Gemäß Fig. 3 weist der schulterseitige Profilblock 7 eine am Niveau der Blockaußenfläche 7d, im Bereich des innenseitigen Blockabschnitts 7₁ zwischen sowie senkrecht zu den radial äußeren Kanten 7aₐ, 7bₐ in Umfangsrichtung ermittelte, insbesondere konstante, maximale Blockbreite b_{B} (Blockbreite an der breitesten Stelle) auf, welche mit der Umfangslänge c_{K} (Pitch K, Fig. 1), c_{M} (Pitch M, Fig. 1), c_{G} (Pitch G, Fig. 1) des jeweiligen zugehörigen Pichtes K, M, G korreliert. "Senkrecht zu den Kanten 7aₐ, 7bₐ" bedeutet bei gebogen verlaufenden Kanten 7aₐ, 7bₐ senkrecht zu lokal an die Kanten 7aₐ, 7bₐ angelegten, parallel zueinander verlaufenden Tangenten.

Wie Fig. 1 ferner zeigt, sind die in den Pitches M und G befindlichen, schulterseitigen Profilblöcke 7 jeweils mit einer Teilungsnut 8 versehen, welche, in Draufsicht betrachtet, gerade sowie parallel zu den Querrillen 6 sowie abschnittsweise im innenseitigen Blockabschnitt 7₁ und abschnittsweise im schulterseitigen Blockabschnitt 7₂ verläuft, laufstreifeninnenseitig in die jeweils angrenzende schulterseitige Umfangsrille 5 einmündet und den zugehörigen schulterseitigen Profilblock 7 in einen den einlaufenden Blockkantenbereich 7a mitumfassenden Blockteil 7h und einen den auslaufenden Blockkantenbereich 7b mitumfassenden Blockteil 7i gliedert (vergl. Fig. 3).

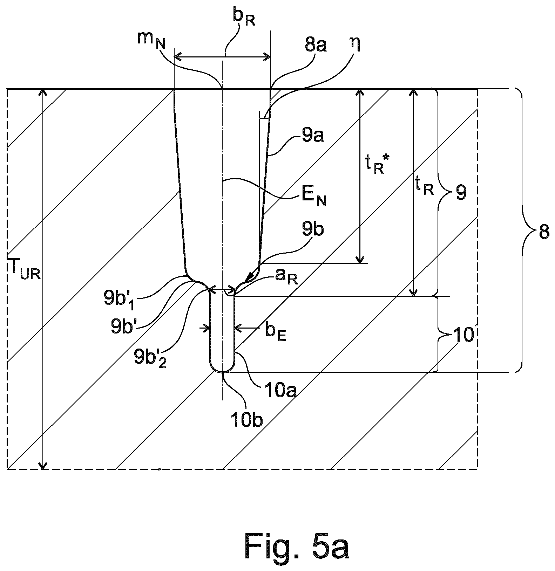

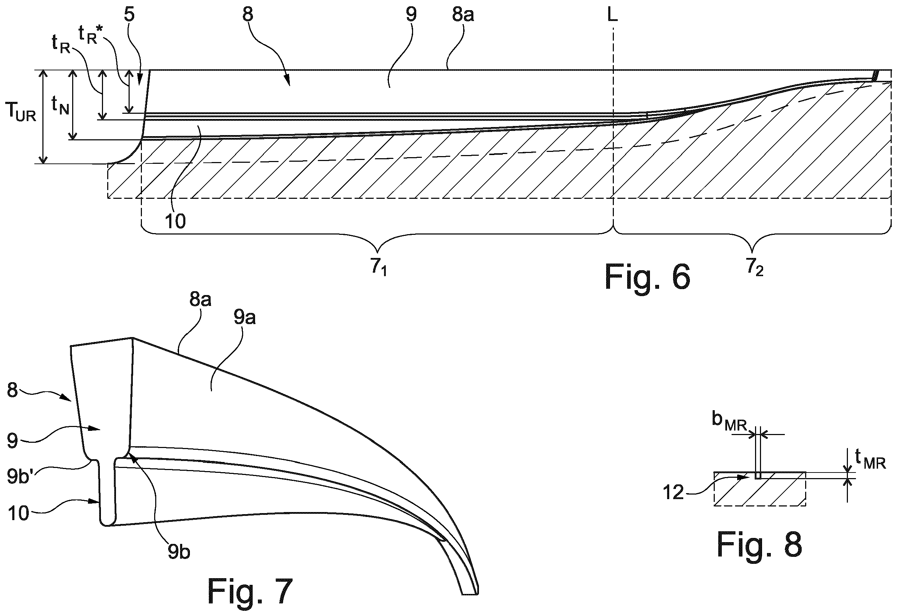

Gemäß Fig. 3 weist die Teilungsnut 8 an der Blockaußenfläche 7d zwei in Draufsicht gerade, parallel zueinander sowie parallel zur den Rillenmittellinien m_{QR} der schulterseitigen Querrillen 6 verlaufende Begrenzungskanten 8a sowie eine mittig zwischen den Begrenzungskanten 8a verlaufende Mittellinie m_{N}, eine von dieser ausgehende in radialer Richtung verlaufende Symmetrieebene E_{N} (Fig. 5, Fig. 5a) und eine in der Symmetrieebene E_{N} vorliegende, in radialer Richtung ermittelte maximale Tiefe t_{N} (Fig. 6, Tiefe an der tiefsten Stelle) von 55% bis 100%, insbesondere von 60% bis 90%, bevorzugt von 65% bis 80%, der Profiltiefe T_{UR} (Fig. 6) auf, wobei die Teilungsnut 8 im innenseitigen Blockabschnitt 7₁ und im außenseitigen Blockabschnitt 7₂ in an sich bekannter Weise in Richtung zum Laufstreifenrand seichter werdend ausläuft (Fig. 6). Besonders bevorzugt beträgt die maximale Tiefe t_{N} höchstens der um 2,0 mm verringerten Profiltiefe T_{UR}. Wie Fig. 5a in Verbindung mit Fig. 6 und Fig. 7 zeigt, setzt sich die Teilungsnut 8 in radialer Richtung - betrachtet ausgehend von den Begrenzungskanten 8a - aus einer über die Begrenzungskanten 8a verlaufenden (Fig. 6, Fig. 7), in die schulterseitige Umfangsrille 5 (Fig. 6) einmündenden Außenrille 9 und einem im Inneren des schulterseitigen Profilblocks 7 radial innenseitig an die Außenrille 9 anschließenden, gemeinsam mit der Außenrille 9 in die schulterseitige Umfangsrille 5 (Fig. 6) einmündenden Inneneinschnitt 10 zusammen, wobei der Inneneinschnitt 10 gemäß Fig. 6 im schulterseitigen Blockabschnitt 7₂ entlang der Außenrille 9 sowie vor dem laufstreifenaußenseitigen Ende der Außenrille 9 ausläuft.

Wie Fig. 5a und Fig. 7 zeigen, ist die Außenrille 9 durch zwei von den Begrenzungskanten 8a ausgehenden, einander gegenüberliegenden Rillenflanken 9a und einem Rillengrund 9b begrenzt, wobei die Außenrille 9 gemäß Fig. 5a eine in Draufsicht senkrecht zur Mittellinie m_{N} (vergl. Fig. 3), und daher senkrecht zur Symmetrieebene E_{N}, sowie zwischen den Begrenzungskanten 8a ermittelte konstante Breite b_{R} von 1,00 mm bis 3,00 mm, insbesondere 1,50 mm bis 2,50 mm, sowie in radialer Richtung eine auf die Symmetrieebene E_{N} sowie das radial innere Ende des Rillengrunds 9b bezogene maximale Tiefe t_{R} (Tiefe an der tiefsten Stelle, vergl. Fig. 6) von mindestens 50%, insbesondere von 60% bis 90%, bevorzugt von 65% bis 85%, besonders bevorzugt von 70% bis 75%, der maximalen Tiefe t_{N} (Fig. 6) der Teilungsnut 8 aufweist. Gemäß Fig. 6 weist die Außenrille 9 die maximale Tiefe t_{R} zumindest über den Großteil, insbesondere über die komplette, ihrer im innenseitigen Blockabschnitt 7₁ vorliegenden Erstreckung auf und wird zumindest im schulterseitigen Blockabschnitt 7₂ - analog zur gesamten Teilungsnut 8 - in insbesondere bekannter Weise in Richtung zum Laufstreifenrand seichter.

Gemäß Fig. 5a verlaufen die Rillenflanken 9a, im in Draufsicht senkrecht zur Mittellinie m_{N} verlaufenden Querschnitt betrachtet (vergl. Lage der Linie V-V in Fig. 3), gerade sowie zur radialen Richtung unter einem Winkel η von 0° bis 6°, insbesondere von zumindest 2°, bevorzugt von 3° bis 5°, wobei sich bei zur radialen Richtung geneigten Rillenflanken 9a (Winkel η ≠ 0°) der senkrecht zur Symmetrieebene E_{N} ermittelte gegenseitige Abstand zwischen den Rillenflanken 9a in Richtung zu den Begrenzungskanten 8a vergrößert und wobei die Rillenflanken 9a im innenseitigen Blockabschnitt 7₁ (Fig. 6) in einer in radialer Richtung ermittelten Tiefe t_{R}* (vergl. Fig. 6) von 82% bis 90% der maximale Tiefe t_{R} der Außenrille 9 enden.

Wie Fig. 5a ferner zeigt, ist der Rillengrund 9b, im zuletzt erwähnten Querschnitt betrachtet, aus zwei Rillengrundhälften 9b' gebildet, welche - jeweils über die Erstreckung des Inneneinschnitts 10 - durch diesen voneinander getrennt sind (Fig. 7) und zur radialen Richtung derart geneigt und S-förmig verlaufen, dass ein parallel zur Laufstreifenperipherie zwischen den Rillengrundrundhälften 9b' ermittelter gegenseitiger Abstand a_{R} über die komplette radiale Erstreckung der Rillengrundhälften 9b' fortlaufend in Richtung zum Inneneinschnitt 10 abnimmt. Die Rillengrundhälften 9b' setzen sich über die Erstreckung des Inneneinschnitts 10, im zuletzt erwähnten Querschnitt betrachtet, jeweils aus einem in der Tiefe t_{R}* an die jeweilige Rillenflanke 9a anschließenden, entlang eines Kreisbogens verlaufenden, radial äußeren Abschnitt 9b'₁ und einem tangential an diesen anschließenden, ebenfalls entlang eines Kreisbogens verlaufenden, radial inneren Abschnitt 9b'₂ zusammen. Im Bereich außerhalb des Inneneinschnitts 10 sind die Rillengrundhälften 9b' jeweils ausschließlich aus den radial äußeren Abschnitten 9b'₁ gebildet, wobei die radial äußeren Abschnitte 9b'₁ zusammenlaufen (Fig. 7). Der Kreisbogen des Abschnitts 9b'₁, 9b'₂ weist jeweils einen Radius von 0,20 mm bis 0,50 mm auf.

Wie Fig. 3 in Kombination mit Fig. 5a zeigt, geht der Inneneinschnitt 10 (Fig. 5a), in Draufsicht betrachtet (Fig. 3, Anm.: Inneneischnitt 10 jedoch nur in Fig. 5a erkennbar), mittig vom Rillengrund 9b (Fig. 5a) der Außenrille 9 (Fig. 5a) aus und ist somit entlang der Mittellinie m_{N} der der Teilungsnut 8 (Fig. 3) ausgerichtet. Der Inneneinschnitt 10 schließt gemäß Fig. 5a an das radial innere Ende der radial inneren Abschnitte 9b'₂ der Rillengrundhälften 9b' an, verläuft, im in Draufsicht senkrecht zur Mittellinie m_{N} der Teilungsnut 8 verlaufenden Querschnitt betrachtet (vergl. Lage der Linie V-V in Fig. 3), in radialer Richtung und ist schmäler ausgeführt als die Außenrille 9. Wie Fig. 5a ferner zeigt, ist der Inneneinschnitt 10 durch zwei tangential an die Rillengrundhälften 9b', also an deren radial inneren Abschnitte 9b'₂, anschließende in radialer Richtung ausgerichtete Einschnittwände 10a und einen gerundeten Einschnittgrund 10b begrenzt, wobei der Inneneinschnitt 10 eine senkrecht zur Symmetrieebene E_{N} sowie zwischen den Einschnittwänden 10a ermittelte, konstante Breite b_{E} von zumindest 0,40 mm und höchstens 50% der Breite b_{R} der Außenrille 9 aufweist.

Wie Fig. 3 zeigt, ist die Teilungsnut 8 im schulterseitigen Profilblock 7, welcher sich im Pitch G befindet (vergl. Fig. 1), bezüglich der maximalen Blockbreite b_{B} mittig im schulterseitigen Profilblock 7 positioniert, sodass der den einlaufenden Blockkantenbereich 7a mitumfassendes Blockteil 7h und der den auslaufenden Blockkantenbereich 7b mitumfassendes Blockteil 7i jeweils eine am Niveau der Blockaußenfläche 7d ermittelte, auf die Mittellinie m_{N} der Teilungsnut 8 bezogene Breite b_{BT} von 50% der maximalen Blockbreite b_{B} aufweist. Gemäß Fig. 1 ist die Teilungsnut 8 im schulterseitigen Profilblock 7, welcher sich im Pitch M befindet, derart in Richtung zum auslaufenden Blockkantenbereich 7b versetzt, dass der den einlaufenden Blockkantenbereich 7a mitumfassendes Blockteil 7h eine Breite b_{BT} von 55% bis 65% der zugehörigen maximalen Blockbreite b_{B} (vergl. Fig. 3) beträgt.

Wie Fig. 1 ferner zeigt, ist jeder schulterseitige Profilblock 7 mit drei (Pitch K, Pitch M) oder vier (Pitch G) in Draufsicht parallel zur Teilungsnut 8 und den Querrillen 6 verlaufenden, in die schulterseitige Umfangsrille 5 einmündenden, den innenseitigen Blockabschnitt 7₁ durchquerenden, abschnittsweise im schulterseitigen Blockabschnitt 7₂ verlaufenden Einschnitten 11 mit einer Breite von 0,4 mm bis 1,2 mm und einer in radialer Richtung ermittelten maximalen Tiefe (Tiefe an der tiefsten Stelle) von 60% bis 100% der Profiltiefe T_{UR} (Fig. 2) versehen. Bei dem im Pitch K befindlichen, schulterseitigen Profilblock 7 sind die Einschnitte 11 gleichmäßig über die maximale Blockbreite b_{B} (vergl. Fig. 3) verteilt. Beim dem im Pitch M befindlichen schulterseitigen Profilblock 7 sind in dem den einlaufenden Blockkantenbereich 7a mitumfassendes Blockteil 7h zwei gleichmäßig über dessen Breite b_{BT} verteilte Einschnitte 11 und im den auslaufenden Blockkantenbereich 7b mitumfassenden Blockteil 7i ein einziger, bezüglich der Breite b_{BT} (nicht eingezeichnet) mittig im Blockteil 7i ausgebildeter Einschnitt 11 vorgesehen. Beim dem im Pitch G befindlichen schulterseitigen Profilblock 7 sind in jedem Blockteil 7h, 7i jeweils zwei gleichmäßig über dessen Breite b_{BT} (nicht eingezeichnet) verteilte Einschnitte 11 ausgebildet.

Die Einschnitte 11 und die Teilungsnuten 8 verleihen den schulterseitigen Profilblöcken 7 Blocksegmente 7j, welche im innenseitigen Blockabschnitt 7₁ jeweils mit drei in axialer Richtung nebeneinander ausgebildeten, in Draufsicht langgestreckten Mikrorillen 12 mit einer konstanten Breite b_{MR} (Fig. 8) und einer konstanten Tiefe t_{MR} (Fig. 8) von jeweils 0,20 mm bis 1,00 mm, insbesondere von 0,30 mm bis 0,90 mm, versehen sind. Jede Mikrorille 12 verläuft, in Draufsicht betrachtet, relativ zu dem bzw. jedem an das jeweilige Blocksegment 7j angrenzenden Einschnitt 11 unter Supplementwinkel θ (Fig. 3) von 60° bis 120°, insbesondere von 70° bis 110°. Die Mikrorillen 12, welche sich in an denselben Einschnitt 11 angrenzenden Blocksegmenten 7j befinden, verlaufen in Draufsicht vorzugsweise miteinander fluchtend.

Die Erfindung ist auf das beschriebene Ausführungsbeispiel nicht beschränkt.

Die Mikrorillen und die Einschnitte sind optional. Die Einschnitte können in Draufsicht zumindest abschnittsweise wellenförmig, beispielsweise in Form einer Sägezahnwelle, verlaufen, wobei die Einschnitte bezogen auf in Draufsicht in ihrer Erstreckungsrichtung ausgerichtete Mittellinien parallel zur Teilungsnut ausgerichtet sind. Die Teilungsnuten und Einschnitte verlaufen, in Draufsicht betrachtet und bezogen auf ihre Mittellinien, vorzugsweise jeweils gerade oder durchgehend gebogen (bogenförmig). Die Profilblöcke können jeweils mit mehreren, insbesondere mit zwei oder drei, Teilungsnuten versehen sein.

Der Laufstreifen muss nicht laufrichtungsgebunden ausgeführt sein. Ferner können die Teilungsnuten in beliebigen Profilblöcken vorgesehen sein. Die Profilblöcke können von insgesamt V-förmig über die Laufstreifenbreite verlaufenden Querrillen begrenzt sein, zwischen welchen die Profilblöcke seitlich begrenzende Kurzrillen verlaufen, wobei die Teilungsnuten in die jeweils angrenzende(n) Kurzrille(n) einmündet bzw. einmünden. Die Querrillen verlaufen - je nach Ausgestaltung sowie in Draufsicht betrachtet - zur axialen Richtung unter einem Winkel von insbesondere 0° bis 65°, insbesondere von bis zu 55°, wobei sich der Winkel bei gerade verlaufenden Querrillen auf die Rillenmittellinie und bei gebogen verlaufenden Querrillen auf eine an die Rillenmittellinie jeweils lokal angelegte Tangente beziehen. Der Ausdruck "senkrecht zur Rillenmittellinie" bezieht sich bei gebogen verlaufenden Querrillen auf eine solche Tangente.

### Bezugszeichenliste

- 1: schulterseitige Profilblockreihe
- 2: zentrale Profilrippe
- 3: halbmittige Profilrippe
- 4: mittlere Umfangsrille
- 5: schulterseitige Umfangsrille
- 5a: kurzer Rillenabschnitt
- 5b: langer Rillenabschnitt
- 6: schulterseitige Querrille
- 6a: Rillengrund
- 6a': Rillengrundrundung
- 6a": Rillengrundboden
- 7: schulterseitiger Profilblock
- 7₁: innenseitiger Blockabschnitt
- 7₂: schulterseitiger Blockabschnitt
- 7a: einlaufender Blockkantenbereich
- 7aₐ: radial äußere Kante
- 7a_{b}: radial innere Kante
- 7b: auslaufender Blockkantenbereich
- 7bₐ: radial äußere Kante
- 7b_{b}: radial innere Kante
- 7c: seitliche Blockkante
- 7d: Blockaußenfläche
- 7e: seitliche Blockflanke
- 7e': radial äußerer Flankenabschnitt
- 7e": radial innerer Flankenabschnitt
- 7f: Blockflanke
- 7f': radial äußere Schrägfläche
- 7f": radial innerer Flankenabschnitt
- 7g: Blockflanke
- 7g': radial äußere Schrägfläche
- 7g": radial innerer Flankenabschnitt
- 7h: Blockteil
- 7i: Blockteil
- 7j: Blocksegment
- 8: Teilungsnut
- 8a: Begrenzungskante
- 9: Außenrille
- 9a: Rillenflanke
- 9b: Rillengrund
- 9b': Rillengrundhälfte
- 9b'₁: radial äußerer Abschnitt
- 9b'₂: radial innerer Abschnitt
- 10: Inneneinschnitt
- 10a: Einschnittwand
- 10b: Einschnittgrund
- 11: Einschnitt
- 12: Mikrorille
- A-A: Linie (Reifenäquatorialebene)
- a_{R}: gegenseitiger Abstand
- b_{B}: maximale Blockbreite
- b_{BT}, b_{E}, b_{MR}, b_{QR}, b_{R}: Breite
- B_{UR}: Breite
- c_{G}, c_{K}, c_{M}: Umfangslänge
- E_{N}: Symmetrieebene
- K: Pitch
- G: Pitch
- h₁: Hilfslinie
- L: Linie (seitlicher Rand der Bodenaufstandsfläche)
- M: Pitch
- m_{N}: Mittellinie
- m_{QR}, m_{UR}: Rillenmittellinie
- P₁: tiefster Punkt
- R: Pfeil (Abrollrichtung)
- t₁, t_{F}, t_{K}, t_{MR}, t_{R}*: Tiefe
- t_{N}, t_{QR}, t_{R}: maximale Tiefe
- T_{UR}: Profiltiefe
- Z: zentraler Laufstreifenbereich
- Z₃: Detail
- α, β, γ, δ, ε, η: Winkel
- θ: Supplementwinkel

## Patentansprüche

1. Fahrzeugreifen mit einem Laufstreifen mit durch Querrillen (6) und seitliche von weiteren Rillen (5) begrenzten Profilblöcken (7) mit je einer Blockaußenfläche (7d) und je einer Blockflanke (7f, 7g) an jeder Querrille (6), wobei zu den Profilblöcken (7) solche gehören, welche jeweils von zumindest einer in die angrenzende(n) weitere(n) Rille(n) (5) einmündenden, schmäler als die Querrillen (6) und insbesondere schmäler als die weiteren Rillen (5) ausgeführten Teilungsnut (8) mit zwei an der Blockaußenfläche (7d) liegenden Begrenzungskanten (8a) und einer in radialer Richtung ermittelten maximalen Tiefe (t_{N}) von zumindest 55% der Profiltiefe (T_{UR}) durchquert und derart in Blockteile (7h, 7i ) gegliedert sind, wobei die Teilungsnut (8) in radialer Richtung aus einer über die Begrenzungskanten (8a) verlaufenden Außenrille (9) und einem radial innen an diese anschließenden Inneneinschnitt (10) mit einer Breite (b_{E}) von zumindest 0,40 mm und höchstens 50% der Breite (b_{R}) der Außenrille (9) gebildet ist,
∘ wobei der Inneneinschnitt (10) gemeinsam mit der Außenrille (9) in die bzw. jede den Profilblock (7) begrenzende, weitere Rille (5) einmündet, wobei die Außenrille (9) eine maximale Tiefe (t_{R}) von mindestens 50% der maximalen Tiefe (t_{N}) der Teilungsnut (8) aufweist und
∘ wobei die Blockflanken (7f, 7g) jeweils eine zur Blockaußenfläche (7d) verlaufende Schrägfläche (7f', 7g') aufweisen, welche, im in Draufsicht senkrecht zur Rillenmittellinie (m_{QR}) der Querrille (6) ausgerichteten Querschnitt betrachtet, als gerade Linie erscheint und zur radialen Richtung unter einem Winkel (γ) von 35° bis 55° verläuft,
**dadurch gekennzeichnet,**
**dass** eine zwischen den Begrenzungskanten (8a) ermittelten Breite (b_{R}) der Teilungsnut (8) 1,00 mm bis 3,00 mm beträgt.

2. Fahrzeugreifen nach Anspruch 1, **dadurch gekennzeichnet, dass** die Außenrille (9) einen Rillengrund (9b) aufweist, von welchem der Inneneinschnitt (10) ausgeht und welcher, im Querschnitt betrachtet, aus zwei Rillengrundrundhälften (9b') gebildet ist, die - über die Erstreckung des Inneneinschnitts (10) - durch diesen voneinander getrennt sind.

3. Fahrzeugreifen nach Anspruch 2, **dadurch gekennzeichnet, dass** die Rillengrundrundhälften (9b') über die Erstreckung des Inneneinschnitts (10), im Querschnitt betrachtet, zur radialen Richtung derart geneigt und S-förmig verlaufen, dass ein parallel zur Laufstreifenperipherie zwischen den Rillengrundrundhälften (9b') ermittelter gegenseitiger Abstand (a_{R}) über die komplette radiale Erstreckung der Rillengrundhälften (9b') fortlaufend in Richtung Rillengrund (9b) abnimmt.

4. Fahrzeugreifen nach Anspruch 3, **dadurch gekennzeichnet, dass** sich die Rillengrundhälften (9b') über die Erstreckung des Inneneinschnitts (10), im Querschnitt betrachtet, jeweils aus einem radial äußeren Abschnitt (9b'₁) und einem tangential an diesen anschließenden radial inneren Abschnitt (9b'₂) zusammensetzen, wobei der radial äußere Abschnitt (9b'₁) und der radial innere Abschnitt (9b'₂) jeweils entlang eines Kreisbogens mit einem Radius von 0,20 mm bis 0,50 mm verläuft.

5. Fahrzeugreifen nach einem der Ansprüche 2 bis 4, **dadurch gekennzeichnet, dass** die Außenrille (9) vom Rillengrund (9b) und zwei Rillenflanken (9a) begrenzt ist, wobei die Rillenflanken (9a), im in Draufsicht senkrecht zur Rillenmittellinie (m_{QR}) der Querrille (6) ausgerichteten Querschnitt betrachtet, zur radialen Richtung unter einem Winkel (η) von 0° bis 6°, insbesondere von zumindest 2°, bevorzugt von 3° bis 5°, verlaufen und insbesondere tangential an das radial äußere Ende der Rillengrundrundhälften (9b') anschließen.

6. Fahrzeugreifen nach einem der Ansprüche 2 bis 5, **dadurch gekennzeichnet, dass** der Inneneinschnitt (10) durch einen Einschnittgrund (10b) und zwei in radialer Richtung verlaufende Einschnittwände (10a) begrenzt ist, welche im Querschnitt betrachtet, tangential an die radial inneren Enden der Rillengrundrundhälften (9b') anschließen.

7. Fahrzeugreifen nach einem der Ansprüche 1 bis 6, **dadurch gekennzeichnet, dass** zu den Profilblöcken (7), welche jeweils von zumindest einer Teilungsnut (8) durchquert sind, insbesondere ausschließlich Profilblöcke (7) gehören, die jeweils von genau einer Teilungsnut (8) durchquert sind.

8. Fahrzeugreifen nach einem der Ansprüche 1 bis 7, **dadurch gekennzeichnet, dass** der Winkel (γ), unter welchem die Schrägflächen (7f', 7g') der Blockflanken (7f, 7g) zur radialen Richtung verlaufen, 40° bis 50° beträgt.

9. Fahrzeugreifen nach einem der Ansprüche 1 bis 8, **dadurch gekennzeichnet, dass** die Schrägfläche (7f', 7g') jeder Blockflanke (7f, 7g) durch eine an der Blockaußenfläche (7d) liegende, radial äußere Kante (7aₐ) und eine radial innere Kante (7a_{b}) begrenzt ist, wobei die radial innere Kante (7a_{b}) in einer in radialer Richtung ermittelten konstanten Tiefe (t_{K}) von 0,50 mm bis 1,50 mm, insbesondere von 0,75 mm bis 1,25 mm, verläuft.

10. Fahrzeugreifen nach einem der Ansprüche 1 bis 9, **dadurch gekennzeichnet, dass** sich die Blockflanke (7f, 7g), im Querschnitt betrachtet, aus der Schrägfläche (7f', 7g') und einem radial inneren Flankenabschnitt (7f", 7g") zusammensetzt, wobei der radial inneren Flankenabschnitt (7f", 7g") zur radialen Richtung unter einem Winkel (δ, ε) von 1° bis 10° verläuft und in einer in radialer Richtung gegenüber dem Niveau der Blockaußenflächen (7d) ermittelten Tiefe (t_{F}) von 55% bis 95%, insbesondere von 65% bis 85%, der maximalen Tiefe (t_{QR}) der Querrille (6) an den Rillengrund (6a) der Querrille (6) anschließt.

11. Fahrzeugreifen nach Anspruch 10, **dadurch gekennzeichnet, dass** der Laufstreifen laufrichtungsgebunden ausgeführt ist, sodass die Profilblöcke (7) an der einen angrenzenden Querrille (6) einen beim Abrollen des Reifens bei Vorwärtsfahrt zuerst in den Untergrund eintretenden, einlaufenden Blockkantenbereich (7a) und an der anderen angrenzenden Querrille (6) einen auslaufenden Blockkantenbereich (7b) aufweisen, wobei der Winkel (δ), unter welchem der radial innere Flankenabschnitt (7f") der entlang des einlaufenden Blockkantenbereichs (7a) ausgebildeten Blockflanke (7f) verläuft, um 2° bis 8°, insbesondere um bis zu 6°, größer ist als der Winkel (ε), unter welchem der radial innere Flankenabschnitt (7g") der entlang des auslaufenden Blockkantenbereichs (7b) ausgebildeten Blockflanke (7g) verläuft.

12. Fahrzeugreifen nach einem der Ansprüche 1 bis 11, **dadurch gekennzeichnet, dass** die Blockteile (7h, 7i) jeweils von zumindest einem in die an den Profilblock (7) angrenzende(n) weitere(n) Rille(n) (5) einmündenden Einschnitt (11) mit einer Breite von 0,4 mm bis 1,2 mm und einer maximalen Tiefe von 60% bis 100% der Profiltiefe (T_{UR}) durchquert und derart in Blocksegmente (7j) unterteilt sind, wobei der bzw. jeder Einschnitt (11) - bezogen auf seine in Draufsicht in Erstreckungsrichtung ausgerichtete Einschnittmittellinie - parallel zur Teilungsnut (8) verläuft.

13. Fahrzeugreifen nach Anspruch 12, **dadurch gekennzeichnet, dass** die Blocksegmente (7j) jeweils mit in Draufsicht langgestreckten, relativ zu den Einschnitten (11) unter Supplementwinkel (θ) von 60° bis 120°, insbesondere von 70° bis 110°, verlaufenden Mikrorillen (12) mit einer konstanten Breite (b_{MR}) und einer konstanten Tiefe (t_{MR}) von jeweils 0,20 mm bis 1,00 mm, insbesondere von 0,30 mm bis 0,90 mm, versehen sind, wobei die Mikrorillen (12), welche sich in an denselben Einschnitt (11) angrenzenden Blocksegmenten (7j) befinden, in Draufsicht betrachtet, vorzugsweise miteinander fluchtend verlaufen.

14. Fahrzeugreifen nach einem der Ansprüche 1 bis 13, **dadurch gekennzeichnet, dass** die maximale Tiefe (t_{N}) der Teilungsnut (8) bis zu 100%, insbesondere 60% bis 90%, bevorzugt 65% bis 80%, der Profiltiefe (T_{UR}) beträgt.

15. Fahrzeugreifen nach einem der Ansprüche 1 bis 14, **dadurch gekennzeichnet,**
**dass** die Breite (b_{R}) der Außenrille (9) 1,50 mm bis 2,50 mm und/oder
**dass** die maximale Tiefe (t_{R}) der Außenrille (9) 60% bis 90%, bevorzugt 65% bis 85%, besonders bevorzugt 70% bis 75%, der maximale Tiefe (t_{N}) der Teilungsnut (8)
beträgt.

## Claims

1. Vehicle tyre having a tread with profile blocks (7) delimited by transverse channels (6) and laterally by further channels (5), each having a block outer surface (7d) and a block flank (7f, 7g) at each transverse channel (6), wherein the profile blocks (7) include those which are traversed in each case by at least one dividing groove (8), which opens into the adjacent further groove/grooves (5) and is designed to be narrower than the transverse grooves (6) and, in particular, narrower than the further grooves (5), having two delimiting edges (8a) lying on the block outer surface (7d) and having a maximum depth (t_{N}) determined in the radial direction of at least 55% of the profile depth (T_{UR}), and are divided into block parts (7h, 7i) in this way, wherein the dividing groove (8) is formed, in the radial direction, from an outer groove (9), running over the delimiting edges (8a), and an inner sipe (10) adjoining the former radially on the inside and having a width (b_{E}) of at least 0.40 mm and at most 50% of the width (b_{R}) of the outer groove (9),
∘ wherein the inner sipe (10) opens together with the outer groove (9) into the or each further groove (5) which delimits the profile block (7), wherein the outer groove (9) has a maximum depth (t_{R}) of at least 50% of the maximum depth (t_{N}) of the dividing groove (8) and
∘ wherein the block flanks (7f, 7g) each have an oblique surface (7f', 7g') which runs to the block outer surface (7d) and which, as viewed in a cross section oriented perpendicular to the groove centre line (m_{QR}) of the transverse groove (6) in plan view, appears as a straight line and runs at an angle (γ) of 35° to 55° with respect to the radial direction,
**characterized**
**in that** a width (b_{R}) of the dividing groove (8) determined between the boundary edges (8a) is 1.00 mm to 3.00 mm.

2. Vehicle tyre according to Claim 1, **characterized in that** the outer groove (9) has a groove bottom (9b), from which the inner sipe (10) starts and which, as viewed in cross section, is formed from two groove bottom round halves (9b') which - over the extent of the inner sipe (10) - are separated from one another by the latter.

3. Vehicle tyre according to Claim 2, **characterized in that** the groove bottom round halves (9b') run over the extent of the inner sipe (10), as viewed in cross section, in a manner which is inclined with respect to the radial direction and S-shaped in such a way that a mutual distance (a_{R}) determined parallel to the tread periphery between the groove bottom round halves (9b') decreases continuously in the direction of the groove bottom (9b) over the complete radial extent of the groove bottom halves (9b').

4. Vehicle tyre according to Claim 3, **characterized in that** the groove bottom halves (9b') each comprise, over the extent of the inner sipe (10), as viewed in cross section, a radially outer portion (9b'₁) and a radially inner portion (9b'₂) tangentially adjoining said radially outer portion, wherein the radially outer portion (9b'₁) and the radially inner portion (9b'₂) each run along a circular arc with a radius of 0.20 mm to 0.50 mm.

5. Vehicle tyre according to one of Claims 2 to 4, **characterized in that** the outer groove (9) is delimited by the groove bottom (9b) and two groove flanks (9a), wherein the groove flanks (9a), as viewed in the cross section oriented perpendicular to the groove centre line (m_{QR}) of the transverse groove (6) in plan view, run at an angle (η) of 0° to 6°, in particular of at least 2°, preferably of 3° to 5°, with respect to the radial direction and, in particular, tangentially adjoin the radially outer end of the groove bottom round halves (9b').

6. Vehicle tyre according to one of Claims 2 to 5, **characterized in that** the inner sipe (10) is delimited by a sipe bottom (10b) and two sipe walls (10a) running in the radial direction, which, as viewed in cross section, adjoin the radially inner ends of the groove bottom round halves (9b') tangentially.

7. Vehicle tyre according to one of Claims 1 to 6, **characterized in that** the profile blocks (7), which are each traversed by at least one dividing groove (8), include, in particular, exclusively profile blocks (7) which are each traversed by exactly one dividing groove (8).

8. Vehicle tyre according to one of Claims 1 to 7, **characterized in that** the angle (γ), at which the oblique surfaces (7f', 7g') of the block flanks (7f, 7g) run in relation to the radial direction, is 40° to 50°.

9. Vehicle tyre according to one of Claims 1 to 8, **characterized in that** the oblique surface (7f', 7g') of each block flank (7f, 7g)is delimited by a radially outer edge (7aₐ) lying on the block outer surface (7d) and a radially inner edge (7a_{b}), wherein the radially inner edge (7a_{b}) runs at a constant depth (t_{K}), determined in the radial direction, of 0.50 mm to 1.50 mm, in particular of 0.75 mm to 1.25 mm.

10. Vehicle tyre according to one of Claims 1 to 9, **characterized in that** the block flank (7f, 7g), as viewed in cross section, comprises the oblique surface (7f', 7g') and a radially inner flank portion (7f", 7g"), wherein the radially inner flank portion (7f", 7g") runs at an angle (δ, ε) of from 1° to 10° with respect to the radial direction, and adjoins the channel bottom (6a) of the transverse channel (6) at a depth (t_{F}), determined in the radial direction with respect to the level of the block outer surfaces (7d), of 55% to 95%, in particular of 65% to 85%, of the maximum depth (t_{QR}) of the transverse channel (6).

11. Vehicle tyre according to Claim 10, **characterized in that** the tread is of directional design, such that the profile blocks (7) have, on the one adjacent transverse channel (6), a running-in block edge region (7a) which first comes into effect with the underlying surface during rolling of the tyre during forward travel and, on the other adjacent transverse channel (6), a running-out block edge region (7b), wherein the angle (δ), at which the radially inner flank portion (7f") of the block flank (7f) formed along the running-in block edge region (7a) runs, is greater than the angle (ε), at which the radially inner flank portion (7g") of the block flank (7g) formed along the running-out block edge region (7b) runs, by 2° to 8°, in particular by up to 6°.

12. Vehicle tyre according to one of Claims 1 to 11, **characterized in that** the block parts (7h, 7i) are traversed in each case by at least one sipe (11) having a width of 0.4 mm to 1.2 mm and a maximum depth of 60% to 100% of the profile depth (T_{UR}) and opening into the further groove/grooves (5) adjoining the profile block (7) and are divided into block segments (7j) in this way, wherein the or each sipe (11) - in relation to its sipe centre line oriented in the direction of extent in plan view - runs parallel to the dividing groove (8).

13. Vehicle tyre according to Claim 12, **characterized in that** the block segments (7j) are each provided with microgrooves (12) which are, in plan view, elongate and run at a supplementary angle (θ) of 60° to 120°, in particular of 70° to 110°, relative to the sipes (11), with a constant width (b_{MR}) and a constant depth (t_{MR}) of in each case 0.20 mm to 1.00 mm, in particular of 0.30 mm to 0.90 mm, wherein the microgrooves (12), which are located in block segments (7j) adjoining the same sipe (11), preferably run in alignment with one another as viewed in plan view.

14. Vehicle tyre according to one of Claims 1 to 13, **characterized in that** the maximum depth (t_{N}) of the dividing groove (8) is up to 100%, in particular 60% to 90%, preferably 65% to 80%, of the profile depth (T_{UR}).

15. Vehicle tyre according to one of Claims 1 to 14, **characterized in that** the width (b_{R}) of the outer groove (9) is 1.50 mm to 2.50 mm, and/or
**in that** the maximum depth (t_{R}) of the outer groove (9) is 60% to 90%, preferably 65% to 85%, particularly preferably 70% to 75%, of the maximum depth (t_{N}) of the dividing groove (8).

## Revendications

1. Pneumatique de véhicule comportant une bande de roulement pourvue de blocs de profil (7) délimités par des rainures transversales (6) et, latéralement, par d'autres rainures (5), présentant chacun une surface extérieure de bloc (7d) et un flanc de bloc (7f, 7g) au niveau de chaque rainure transversale (6), les blocs de profil (7) comprenant des blocs qui sont chacun traversés par au moins une rainure de séparation (8) débouchant dans la ou les autres rainures adjacentes (5), réalisée plus étroite que les rainures transversales (6) et notamment plus étroite que les autres rainures (5), présentant deux bords de délimitation (8a) situés au niveau de la surface extérieure de bloc (7d) et une profondeur maximale (t_{N}), déterminée dans la direction radiale, représentant au moins 55 % de la profondeur de profil (T_{UR}), et qui sont ainsi subdivisés en parties de bloc (7h, 7i), la rainure de séparation (8) étant constituée, dans la direction radiale, d'une rainure extérieure (9) s'étendant à partir des bords de délimitation (8a) et d'une incision intérieure (10) qui se raccorde à celle-ci radialement vers l'intérieur et qui présente une largeur (b_{E}) d'au moins 0,40 mm et d'au plus 50 % de la largeur (b_{R}) de la rainure extérieure (9),
∘ l'incision intérieure (10) débouchant conjointement avec la rainure extérieure (9) dans la ou chacune des autres rainures (5) délimitant le bloc de profil (7), la rainure extérieure (9) présentant une profondeur maximale (t_{R}) représentant au moins 50 % de la profondeur maximale (t_{N}) de la rainure de séparation (8), et
∘ les flancs de bloc (7f, 7g) présentant chacun une surface inclinée (7f', 7g') s'étendant vers la surface extérieure de bloc (7d), laquelle, considérée dans une section transversale orientée, en vue de dessus, perpendiculairement à la ligne médiane de rainure (m_{QR}) de la rainure transversale (6), apparaît sous la forme d'une ligne droite et s'étend selon un angle (γ) de 35° à 55° par rapport à la direction radiale,
**caractérisé**
**en ce qu'**une largeur (bR) de la rainure de séparation (8), déterminée entre les bords de délimitation (8a), est de 1,00 mm à 3,00 mm.

2. Pneumatique de véhicule selon la revendication 1, **caractérisé en ce que** la rainure extérieure (9) présente un fond de rainure (9b) à partir duquel s'étend l'incision intérieure (10) et qui, considéré en section transversale, est formé de deux moitiés arrondies de fond de rainure (9b') séparées l'une de l'autre par ladite incision intérieure (10) sur toute l'étendue de celle-ci.

3. Pneumatique de véhicule selon la revendication 2, **caractérisé en ce que** les moitiés arrondies de fond de rainure (9b'), sur toute l'étendue de l'incision intérieure (10), considérées en section transversale, sont inclinées par rapport à la direction radiale et présentent une forme en S telle qu'une distance mutuelle (a_{R}), déterminée parallèlement à la périphérie de la bande de roulement entre les moitiés arrondies de fond de rainure (9b'), diminue continuellement en direction du fond de rainure (9b) sur toute l'étendue radiale des moitiés arrondies de fond de rainure (9b').

4. Pneumatique de véhicule selon la revendication 3, **caractérisé en ce que** les moitiés de fond de rainure (9b'), sur toute l'étendue de l'incision intérieure (10), considérées en section transversale, sont chacune constituées d'une section radialement extérieure (9b'1) et d'une section radialement intérieure (9b'2) qui se raccorde tangentiellement à celle-ci, la section radialement extérieure (9b'1) et la section radialement intérieure (9b'2) s'étendant chacune le long d'un arc de cercle présentant un rayon de 0,20 mm à 0,50 mm.

5. Pneumatique de véhicule selon l'une des revendications 2 à 4, **caractérisé en ce que** la rainure extérieure (9) est délimitée par le fond de rainure (9b) et deux flancs de rainure (9a), les flancs de rainure (9a), considérés dans une section transversale orientée, en vue de dessus, perpendiculairement à la ligne médiane de rainure (m_{QR}) de la rainure transversale (6), s'étendant selon un angle (η) de 0° à 6°, notamment d'au moins 2°, de préférence de 3° à 5°, par rapport à la direction radiale et se raccordant notamment tangentiellement à l'extrémité radialement extérieure des moitiés arrondies de fond de rainure (9b').

6. Pneumatique de véhicule selon l'une des revendications 2 à 5, **caractérisé en ce que** l'incision intérieure (10) est délimitée par un fond d'incision (10b) et deux parois d'incision (10a) s'étendant dans la direction radiale, lesquelles, considérées en section transversale, se raccordent tangentiellement aux extrémités radialement intérieures des moitiés arrondies de fond de rainure (9b').

7. Pneumatique de véhicule selon l'une des revendications 1 à 6, **caractérisé en ce que** les blocs de profil (7) qui sont chacun traversés par au moins une rainure de séparation (8) comprennent notamment exclusivement des blocs de profil (7) qui sont chacun traversés par exactement une rainure de séparation (8).

8. Pneumatique de véhicule selon l'une des revendications 1 à 7, **caractérisé en ce que** l'angle (γ) selon lequel les surfaces inclinées (7f', 7g') des flancs de bloc (7f, 7g) s'étendent par rapport à la direction radiale est de 40° à 50°.

9. Pneumatique de véhicule selon l'une des revendications 1 à 8, **caractérisé en ce que** la surface inclinée (7f', 7g') de chaque flanc de bloc (7f, 7g) est délimitée par un bord radialement extérieur (7aa) situé au niveau de la surface extérieure de bloc (7d) et par un bord radialement intérieur (7a_{b}), le bord radialement intérieur (7a_{b}) s'étendant à une profondeur constante (t_{K}), déterminée dans la direction radiale, de 0,50 mm à 1,50 mm, notamment de 0,75 mm à 1,25 mm.

10. Pneumatique de véhicule selon l'une des revendications 1 à 9, **caractérisé en ce que** le flanc de bloc (7f, 7g), considéré en section transversale, est constitué de la surface inclinée (7f', 7g') et d'une section de flanc radialement intérieure (7f", 7g"), la section de flanc radialement intérieure (7f", 7g") s'étendant selon un angle (δ, ε) de 1° à 10° par rapport à la direction radiale et se raccordant au fond de rainure (6a) de la rainure transversale (6) à une profondeur (t_{F}), déterminée dans la direction radiale par rapport au niveau des surfaces extérieures de bloc (7d), représentant 55 % à 95 %, notamment 65 % à 85 %, de la profondeur maximale (t_{QR}) de la rainure transversale (6).

11. Pneumatique de véhicule selon la revendication 10, **caractérisé en ce que** la bande de roulement présente un sens de roulement imposé, de telle sorte que les blocs de profil (7) présentent, au niveau de l'une des rainures transversales (6) adjacentes, une zone de bord de bloc d'entrée (7a), qui entre en premier en contact avec le sol lors du roulement du pneumatique en marche avant, et, au niveau de l'autre rainure transversale (6) adjacente, une zone de bord de bloc de sortie (7b), l'angle (δ) selon lequel s'étend la section de flanc radialement intérieure (7f") du flanc de bloc (7f) formé le long de la zone de bord de bloc d'entrée (7a) étant supérieur de 2° à 8°, notamment de jusqu'à 6°, à l'angle (ε) selon lequel s'étend la section de flanc radialement intérieure (7g") du flanc de bloc (7g) formé le long de la zone de bord de bloc de sortie (7b).

12. Pneumatique de véhicule selon l'une des revendications 1 à 11, **caractérisé en ce que** les parties de bloc (7h, 7i) sont chacune traversées par au moins une incision (11) débouchant dans la ou les autres rainures (5) adjacentes au bloc de profil (7), présentant une largeur de 0,4 mm à 1,2 mm et une profondeur maximale représentant 60 % à 100 % de la profondeur de profil (T_{UR}), et sont ainsi subdivisées en segments de bloc (7j), ladite ou chaque incision (11) s'étendant parallèlement à la rainure de séparation (8), par rapport à sa ligne médiane d'incision orientée, en vue de dessus, dans sa direction d'extension.

13. Pneumatique de véhicule selon la revendication 12, **caractérisé en ce que** les segments de bloc (7j) sont chacun pourvus de microrainures (12) qui sont allongées en vue de dessus et s'étendent par rapport aux incisions (11) selon un angle supplémentaire (θ) de 60° à 120°, notamment de 70° à 110°, et qui présentent une largeur constante (b_{MR}) et une profondeur constante (t_{MR}) de respectivement 0,20 mm à 1,00 mm, notamment de 0,30 mm à 0,90 mm, les microrainures (12) qui se trouvent dans des segments de bloc (7j) adjacents à une même incision (11) s'étendant de préférence dans l'alignement les unes des autres, considérées en vue de dessus.

14. Pneumatique de véhicule selon l'une des revendications 1 à 13, **caractérisé en ce que** la profondeur maximale (t_{N}) de la rainure de séparation (8) représente jusqu'à 100 %, notamment 60 % à 90 %, de préférence 65 % à 80 %, de la profondeur de profil (T_{UR}).

15. Pneumatique de véhicule selon l'une des revendications 1 à 14, **caractérisé en ce que** la largeur (b_{R}) de la rainure extérieure (9) est de 1,50 mm à 2,50 mm et/ou la profondeur maximale (t_{R}) de la rainure extérieure (9) représente 60 % à 90 %, de préférence 65 % à 85 %, de manière particulièrement préférée 70 % à 75 %, de la profondeur maximale (t_{N}) de la rainure de séparation (8).
